**Europäisches Patentamt**

(19) **European Patent Office**

**Office européen des brevets**

(11) Numéro de publication: **0 003 464**
**B1**

(12) # FASCICULE DE BREVET EUROPEEN

(45) Date de publication du fascicule du brevet: **08.06.83**

(51) Int. Cl.³: **C 22 B 1/00, C 22 B 7/02**

(21) Numéro de dépôt: **79400056.2**

(22) Date de dépôt: **26.01.79**

(54) Procédé de valorisation du plomb et du zinc contenus dans les boues d'épuration secondaire des gaz de hauts fourneaux.

(30) Priorité: **31.01.78 FR 7802676**

(43) Date de publication de la demande:
**08.08.79 Bulletin 79/16**

(45) Mention de la délivrance du brevet:
**08.06.83 Bulletin 83/23**

(84) Etats contractants désignés:
**BE CH DE GB IT LU NL SE**

(56) Documents cités:
**FR - A - 2 299 089**
**FR - A - 2 362 669**
**US - A - 2 760 635**
**US - A - 3 791 595**
**CHEMICAL ABSTRACTS, vol. 86, no. 8, 21-02-1977 Columbus, Ohio, USA Page 142, colonne 1, abrégé 4589 1h**

(73) Titulaire: **ANVAR Agence Nationale de Valorisation de la Recherche**
**13, rue Madeleine Michelis**
**F-92522 Neuilly-sur-Seine (FR)**

(72) Inventeur: **Cases, Jean**
**17 Rue Gambetta**
**F-54500 Vandoeuvre (FR)**
Inventeur: **Valence, Georges**
**Groupe Scolaire Jeanne d'Arc**
**F-54500 Vandoeuvre (FR)**
Inventeur: **Lietard, Olivier**
**Union Minerale Chemin de Halage**
**F-60640 Precy sur Oise (FR)**

(74) Mandataire: **Harlé, Robert et al,**
**c/o Cabinet Harlé & Phélip 21, rue de la Rochefoucauld**
**F-75009 Paris (FR)**

# 0 003 464

Procédé de valorisation du plomb et du zinc contenus dans les boues d'épuration secondaire des gaz de hauts fourneaux

La présente invention concerne un procédé de valorisation du plomb et du zinc contenus dans les boues d'épuration secondaire des gaz de hauts fourneaux.

Les fumées produites lors de la fabrication de la fonte et de l'acier ne peuvent être rejetées dans l'atmosphère qu'après avoir subi un traitement de dépoussiérage. Les procédés et équipements permettant cette opération assurent alors un rejet à l'atmosphère conforme aux normes exigées, tandis que les poussières, généralement piégées en milieu humide, sont extraites puis récupérées sous forme de boues. Ces boues, dites boues d'épuration secondaire, sont constituées en général des éléments de la charge du haut fourneau (minerais de fer, agglomérés plus ou moins réduits, coke, etc...) et de métaux non ferreux, tels que le plomb et le zinc. Elles sont, suivant leur contenu en fer, soit recyclées après agglomération, soit abandonnées sur des décharges en plein air. Dans le premier cas, le recyclage élève le taux en zinc et en plomb des minerais chargés dans le haut fourneau, ce qui provoque d'importantes perturbations dans sa marche par l'attaque des parois, le ralentissement du transit du minerai par la formation de bouchons, la présence de vapeurs nocives lors de la coulée et la dégradation des qualités de la fonte et de l'acier. Dans le second cas, l'abandon sur les crassiers de boues nocives provoque la pollution des rivières et des nappes aquifères.

La production de boues est voisine de 2 à 3 kg de matières séches par tonne de fonte hématite et 5 kg par tonne de fonte phosphoreuse; les teneurs peuvent vaier de 3 à 25% en zinc et 1 à 9% en plomb et confèrent à ces boues le caractère de minerais riches en ces eléments. Compte-tenu de la production européenne de fonte, le traitement de ces boues en vue de la récupération de ces métaux présente un grand intérêt économique et contribue, comme on l'a déjà signalé plus haut, à la lutte contre la pollution, à l'amélioration de la marche des installations sidérurgiques et au recyclage intégral des résidus.

Les procédés de valorisation utilisés en vue d'éliminer le plomb et le zinc des poussières de l'industire sidérurgique comprennent des procédés de traitement par voie sèche et des procédés de traitement par voie humide.

Parmi les procédés par voie sèche, on peut citer notamment:

— le procédé de traitement par chloruration selon NEUHAUS et al. [Stahl. Eisen. All., 78 (1958) pp 1662—1670] selon lequel l'utilisation de $MgCl_2$, $CaCl_2$ et $NH_4Cl$ lors de l'agglomération des boues permet la vaporisation du zinc et du plomb. Par exemple, l'addition de 3% de $CaCl_2$ à un mélange à agglomérer renfermant 10% de boues d'épuration de gaz de haut fourneau permet d'éliminer 66% du zinc et 90% du plomb.

— la cuisson de boulettes et la fusion dans un four de 15 KVA selon PINAEV A. K. [Stahl. (URSS) 11 (1972) pp 1056—1057] permet l'obtention d'un alliage à 98% de Fe et la récupération de 95% de zinc.

— la réduction en four tournant selon le procédé de MEYER et al. [Stahl. Eisen. A11., 96 (1976) p. 1228—1233] ou celui de SUGASAWA et al. [Comm. Seminar on the utilization of prereducted materials in iron and steel making. Bucarest, 27—28 Mai 1976. CEE Steel/SEM/2/RI, 7 pages].

En Europe, de remarquables recherches ont été effectuées en vue de l'utilisation du four Waelz Berzelius [E. GORY—Traitement de boues et poussières sidérurgiques—Association Technique de la sidérurgie française, Commission de l'environnement EV SO—Juin 1975] pour la récupération des métaux contenus dans les minerais de zinc pauvres et à faible granulométrie et dans les résidus zincifères et plombifères (cendres et scories). Il s'est avéré cependant que la rentabilité de ce four ne peut être assurée que si les teneurs d'entrée en plomb et en zinc sont suffisantes et supérieures à 10%.

— le procédé de réduction en colonne verticale de type New-Jersey ["Le zinc et sa métallurgie"—Auteur: Centre Technique du zinc. Ed. CT 2—34, rue Collange 92307 LEVALLOIS PERRET 4ème édition—Juin 1974].

Parmi les procédés de traitement par voie humide, on peut citer notamment:

— l'extraction du zinc et du plomb à l'aide de solutions ammoniacales de carbonate d'ammonium [WAGNER et al. Recherche CECA No. 235 (1976)].

— l'extraction à l'aide de solutions sodiques [HISSEL et al. Recherche CECA No. 6252 12/2/235 1976].

La plupart des procédés mentionnés ci-dessus sont à la limite de la rentabilité industrielle.

D'autre part, il convient de prendre en compte, au titre de l'état de la technique, les publications suivantes:

— la demande de brevet FR—A—2 362 669, où est décrit un procédé permettant d'éliminer sélectivement le zinc des poussières sidérurgiques récupérées. Ce procédé comporte une suite

**0 003 464**

complexe d'opérations et nécessite une pulvérisation fine de toute la masse des poussières à traiter et, sans qu'il soit fait allusion à une quelconque coupe granulométrique, fait intervenir un classement humide qui doit être réalisé sous vide. De plus, il ne permet pas de séparer simultanément le plomb et les composés du plomb.

— la demande de brevet DE—B—1.170.648, dans laquelle est décrit un procédé pour dépoussiérer par voie humide des gaz résiduels contenant du plomb et du zinc. Ce procédé assure la séparation sélective par voie hydrométallurgique (lessivage des poussières avec $H_2SO_4$ et des solutions sodiques) de plomb et du zinc.

— la demande de brevet DE—B—1.533.070, dans laquelle est décrit un procédé pour le traitement de poussières fines métallifères. Ce procédé ne se rattache à des notions de granulométrie que pour distinguer les divers degrés d'humidité à respecter, qui sont considérés comme la variable essentielle; ce procédé fait en outre intervenir un mélange préalable des boues avec des agents réducteurs solides finement divisés, puis, après adjustement au degré d'humidité typique et optimal en fonction du spectre granulométrique des poussières et/ou boues traitées, séchage au four droit et fusion en atmosphère réductrice des poussières agglomérées, réalisant ainsi une volatilisation du plomb et du zinc.

— les brevets US 3.524.743 et 3.547.623, qui, l'un et l'autre, concernent des procédés pour agglomérer de manière convenable des boues métallifères (par adjonction de réactifs précis avant introduction dans un four approprié) et précisent quelles doivent être les conditions de réduction; les procédés mis en oeuvre opèrent par pyrométallurgie.

— la demande de brevet FR—A—2 299 089, dans laquelle est décrit un procédé de traitement de poudres contenant des métaux (tels que du plomb, du zinc, du fer et autres), qui comprend la mise en oeuvre de poudres composées d'une part de particules extrêmement fines allant de 2 à 3 $\mu$m et d'autre part de grosses particules d'environ 1 mm et consiste essentiellement à effectuer une classification par hydrocyclonage des boues préalablement diluées, la surverse contenant des boues enrichies en zinc et plomb, la sousverse des boues enrichies en fer. Cette dernière peut être utilisée directement pour préparer une matière métallurgique, c'est-à-dire renvoyée au haut fourneau. Selon ce procédé on doit veiller à respecter une contrainte concernant la concentration globale en solides de la boue.

On a maintenant trouvé un procédé simple qui permet d'obtenir, à partir des boues d'épuration secondaire des gaz de hauts fourneaux, d'une part, un produit enrichi en plomb et en zinc, qui peut ensuite être traité en vue de la récupération du plomb et du zinc, et, d'autre part, un résidu appauvri en plomb et en zinc qui est recyclable à l'alimentation du haut fourneau.

On a en effet trouvé, de façon inattendue, que les métaux non ferreux, tels que le zinc et le plomb, ont tendance à se concentrer dans les fines lorsque leur teneur croît dans lesdites boues.

Le procédé selon la présente invention se définit comme étant un procédé de valorisation du plomb et du zinc contenus dans les boues d'épuration des gaz de hauts fourneaux, utilisant une pré-concentration par voie physique, dans lequel on effectue ladite pré-concentration par un classement granulométrique à une valeur comprise entre 10 et 50 $\mu$, caractérisé en ce qu'il comprend un traitement de décapage par attrition de la fraction ayant une granulométrie supérieure à la valeur susdite comprise entre 10 et 50 $\mu$m, le classement granulométrique du produit obtenu à une valeur granulométrique comprise entre 10 et 50 $\mu$m, le recyclage vers l'alimentation des hauts fourneaux de la fraction dont la granulométrie est supérieure à cette valeur comprise entre 10 et 50 $\mu$m, et la récupération des fractions ayant une granulométrie inférieure à la valeur granulométrique susdite, en vue de la valorisation de Zn et de Pb contenus dans ces fractions.

Les boues mises en oeuvre dans le procédé de l'invention sont des boues d'épuration secondaire des gaz de hauts fourneaux.

Le classement granulométrique peut être réalisé en une seule étape ou en plusieurs étapes. Par exemple, selon une variante du procédé de l'invantion, il peut être avantageux de soumettre au préalable les boues à un classement granulométrique par séparation à une valeur comprise entre 80 et 150 $\mu$m et de procéder ensuite à un classement granulométrique à une valeur comprise entre 10 et 50 $\mu$m, de préférence entre 20 et 50 $\mu$m, de la fraction résultant de l'étape préalable et possédant une granulométrie inférieure à 80—150 $\mu$m.

Ce classement granulométrique préalable ne s'impose pas dans tous les cas; l'examen des caractéristiques minéralogiques et granulométriques des boues à traiter permet de décider de l'opportunité de cette séparation à une valeur granulométrique entre 80 et 150 $\mu$m.

La fraction de plus grosse granulométrie ainsi obtenue est traitée en vue de la récupération des matières solides (décantation ou filtration) qui pourront ensuite être recyclées, après agglomération, à l'alimentation du haut fourneau.

Les classements granulométriques peuvent être effectués par tous moyens appropriés. On peut par exemple effecteur les classements granulométriques par tamisage à l'aide d'une série de tamis classiques [+250 $\mu$m; +104—250 $\mu$m; +63—104 $\mu$m; +37—63 $\mu$m et 0—37 $\mu$m].

Ces classements granulométriques peuvent également être réalisés par centrifugation en appareil statique, tel que par cyclonage. On a trouvé que ce dernier mode de classement granulométrique est

3

aussi efficace avec les boues obtenues après additon de floculants qu'avec les boues naturellement décantées. Il en résulte que le procédé de l'invention peut être mis en oeuvre sans modifications des installations de récupération des boues existant actuellement. D'autres modes de classement granulométriques peuvent être utilisés pour la mise en oeuvre de procédé de l'invention. Il peut être judicieux, selon le mode de séparation choisi, d'ajouter aux boues floculées provenant d'installations existantes des produits provoquant le défloculation et la dispersion des particules solides constitutives de la boue. A titre d'exemple d'un tel produit, on peut citer les produits à base de polyphosphates.

Lorsqu'on opère par cyclonage, il peut être avantageux de soumettre la fraction de granulométrie inférieure à la valeur granulométrique de 20—50 $\mu$m à une séparation ultérieure à 10 $\mu$m environ.

Les fractions de granulométrie inférieure à la valeur granulométrique de 20—50 $\mu$m ou de 10 $\mu$m constituent des boues préconcentrées en zinc et en plomb et peuvent être utilisées en vue de la récupération du zinc et du plomb, alors que les fractions de granulometrie superieure a la valeur granulometrique de 20—50 $\mu$m ou de 10 $\mu$m peuvent être recyclées à l'alimentation des hauts fourneaux.

Selon un mode de réalisation particulièrement préféré du procédé selon l'invention, on soumet les boues d'épuration des gaz de hauts foruneaux aux étapes ci-après:

1) classement granulométrique par séparation à une valeur granulométrique comprise entre 10 et 50 $\mu$m après une éventuelle séparation préalable à 80—150 $\mu$m;

2) traitement de décapage par attrition de la fraction ayant une granulométrie supérieure à la valeur granulométrique de 10—50 $\mu$m;

3) classement granulométrique de la fraction résultant de l'étape 2) à une valeur granulométrique comprise entre 10—50 $\mu$m.

4) recyclage vers l'alimentation du haut fourneau des fractions résultant des étapes 1) et 3) et ayant une granulométrie supérieure à ladite valeur granulométrique de 10—50 $\mu$m;

5) récupération des fractions ayant une granulométrie inférieure à la valeur granulométrique provenant des étapes 1) et 3) en vue de la valorisation de Zn et de Pb contenus dans ces fractions.

L'invention est décrite plus en détail en référence aux figures 1 à 12 des planches de dessins annexées dans lesquelles:

Fig. 1 est un schéma illustrant un mode de mise en oeuvre particulièrement préféré de l'invention;

Fig. 2 à 12 sont des graphiques ou des diagrammes relatifs aux résultats obtenus lors de la mise en oeuvre de l'invention selon les exemples illustratifs dont le détail sera donné pius loin.

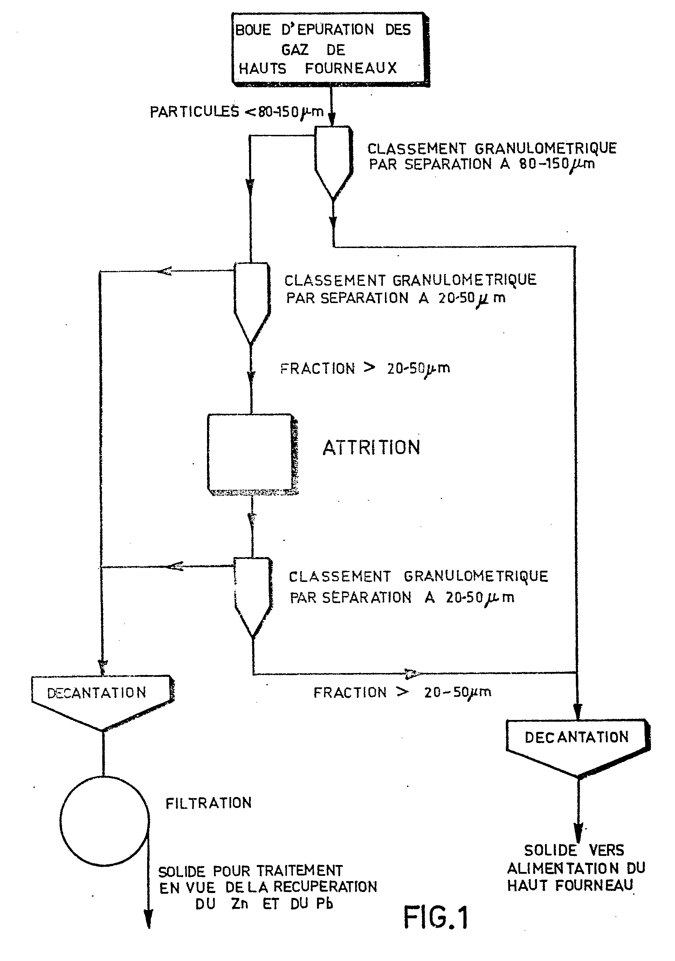

Les fractions obtenues selon l'étape 5) ci-dessus, qui peuvent être dénommées "boues préconcentrées", conviennent particulièrement bien comme charge d'alimentation du four Waelz-Berzelius, ou tout autre procédé pyrométallurgique ou hydrométallurgique, puisque leur teneur en Pb et Zn est généralement supérieure à 10% en poids. Ce mode opératoire particulièrement préféré selon l'invention est représenté schématiquement sur la figure 1.

Dans la présente description, l'expression "valeur granulométrique comprise entre 10—50 $\mu$m" signifie que le coupure granulométrique se fait à une granulométrie comprise dans cette gamme. Cette valeur est déterminée suivant les caractéristiques de produit à traiter et le dispositif de séparation granulométrique utilisé.

Selon une variante préférée du procédé selon l'invention, on procède donc à un traitement par attrition des fractions de boues ayant une granulométrie supérieure à 20—50 $\mu$m et de préférence inférieure à 80—150 $\mu$m, par exemple une granulométrie comprise entre 37 et 104 $\mu$m, c'est-à-dire à un traitement permettant d'obtenir une usure des grains solides par attrition.

Cette opération peut être réalisée en voie humide, dans des broyeurs à haut effet d'attrition, dans des cellules d'attrition avec ou sans addition d'une charge minérale complémentaire, ou dans tout autre appareil conçu à cet effet. Suivant le type d'appareillage, il sera éventuellement nécessaire d'ajuster la teneur en eau de la fraction à traiter à la valeur correspondant à l'efficacité maximum du système utilisé.

A titre du charge minérale complémentaire, on peut utiliser du sable, par exemple du sable d'une granulométrie comprise entre 210 et 350 $\mu$m, la concentration finale en solides (boues+sable) de la pulpe devant être comprise 50 et 80%.

Le temps d'attrition doit être suffisant pour décaper la partie superficielle des particules de boues par frottement et entrechoquement de celles-ci les unes contre les autres ou contre les grains de sable. Des essais ont montré que ce temps d'attrition devait être d'au moins 5 minutes; ce temps doit être déterminé en fonction du dégré de récupération souhaité du plomb et du zinc et du degré de rentabilité du procédé.

L'invention va être maintenant illustrée par les exemples non limitatifs ci-après. Dans ces exemples, on a utilisé 14 échantillons de boues notés 391 à 395, 401 à 405 et 411 à 414.

Ces échantillons ont été prélevés à partir des eaux de lavage des gaz de deux hauts fourneaux de Patural (Lorraine). Au cours de la période de prélèvement, la composition moyenne de l'aggloméré enfourné était la suivante: Fe total: 40.5%—$SiO_2$: 13%—CaO: 19%—$Al_2O_3$: 6%—MgO: 2%—Pb: 0,009%—Zn: 0,036%, la mise au mille du coke étant de 500 kg.

Les analyses totales de ces lots sont données dans le tableau I. Elles représentent les moyennes des analyses effectuées par fluorescence X, sur trois prélèvements homogènes obtenus par quartage en

# 0 003 464

pulpe de chaque échantillon. Comme on peut le constater, on observe des variations importantes des teneurs en plomb et zinc en fonction du temps:

|  | Teneur en plomb | Teneur en zinc |
| --- | --- | --- |
| 1ère semaine échantillons 391 à 395 | 0,7—1,5 | 1,7—3,6 |
| 2ème semaine échantillons 401 à 405 | 1,7—2,2 | 4,3—7,0 |
| 3ème semaine échantillons 411 à 414 | 1,6—2,3 | 4,7—6,4 |

Exemple 1

Classement granulométrique par tamisage des boues d'épuration de gaz de hauts fourneaux

On a procédé à un tamisage par voie humide des échantillons décrits ci-dessus à l'aide d'un vibreur "Sinex" et de tamis des mailles suivantes: 500 microns, 250 microns et 104 microns. On a ensuite soumis à un tamisage humide une partie de la fraction inférieure à 104 microns, à 63 microns et 37 microns. L'autre partie de fraction inférieure à 104 microns a été traitée par cyclonage (voir exemple 2).

Chaque fraction granulométrique est séchée à l'étuve à 105°C, pesée puis quartée à sec. Le quartage est fait à l'aide d'échantillonneurs Minerais et Métaux après broyage de la prise. Les analyses chimiques du Pb et du Zn ont été faites sur les tranches granulométriques suivantes: +250; 104—250; 63—104; 37—63; 10—104 microns. Sur la fraction 0—37 microns ont été effectuées des analyses totales C, CaO, Fe, $SiO_2$, $Al_2O_3$, MgO, $K_2O$, $Na_2O$, P, Mn, S, Pb, Zn.

A partir des paramètres mesurés ont été calculées:

— la distribution poids,
— les récupérations en Pb et Zn dans les diverses fractions granulométriques.

Dans le tableau II ci-après on a indiqué le résultat des analyses effectuées sur la fraction 0—37 $\mu$m.

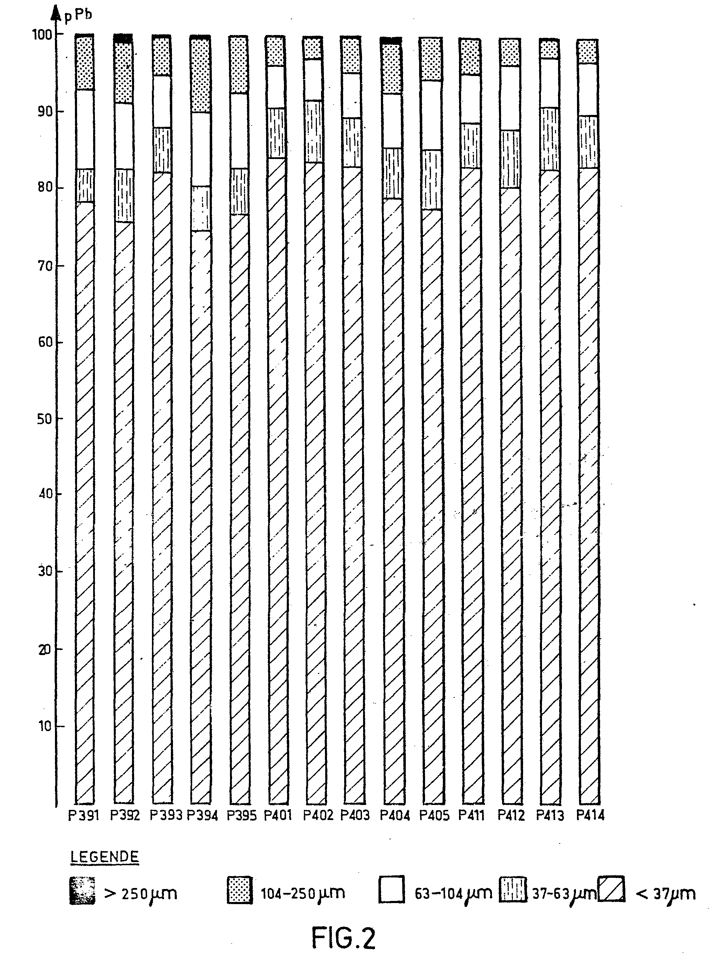

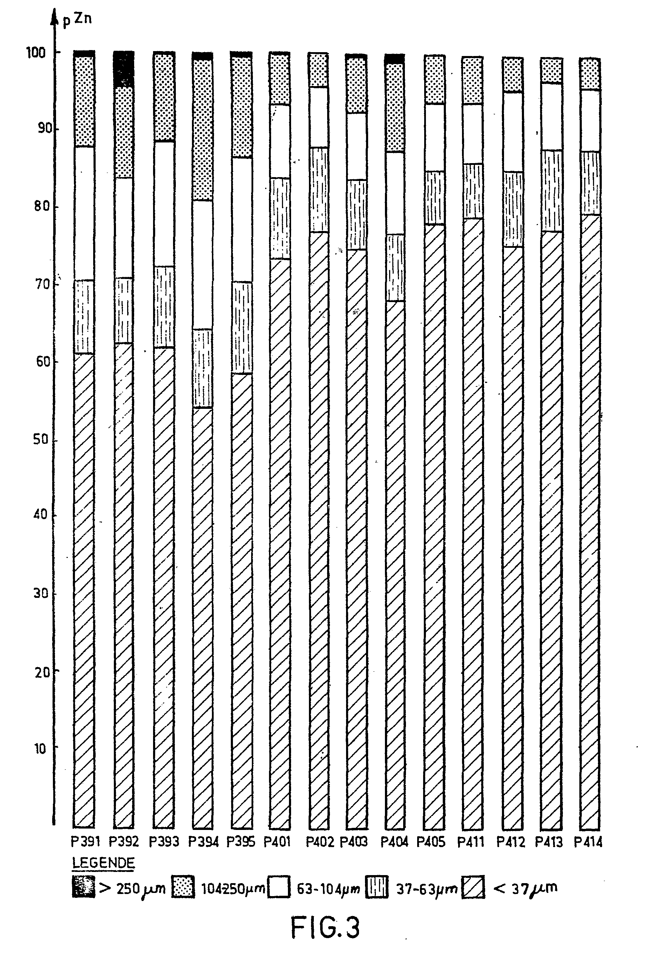

Afin de mettre en évidence l'efficacité du procédé de l'invention, on a également déterminé, comme indiqué précédemment, la teneur en plomb et en zinc des fractions granulométriques supérieures à 37 $\mu$m, et on a porté les résultats sur les diagrammes des figures 2 et 3 sur lesquels sont indiqués, en ordonnées, la récupération en plomb et zinc respectivement dans chaque fraction granulométrique, et, en abscisses, l'échantillon considéré. On constate, à partir des figures 2 et 3, que:

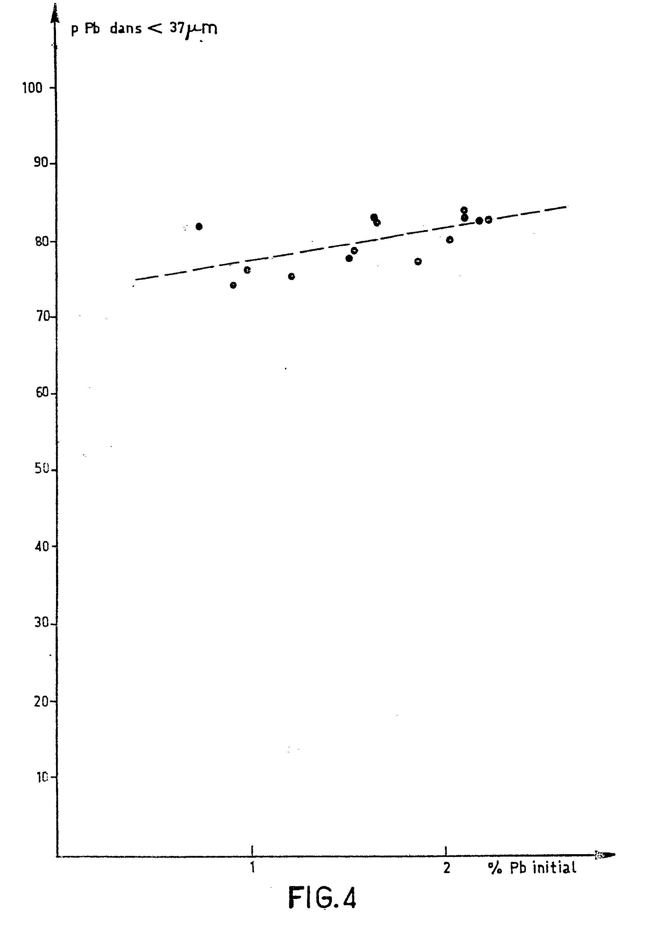

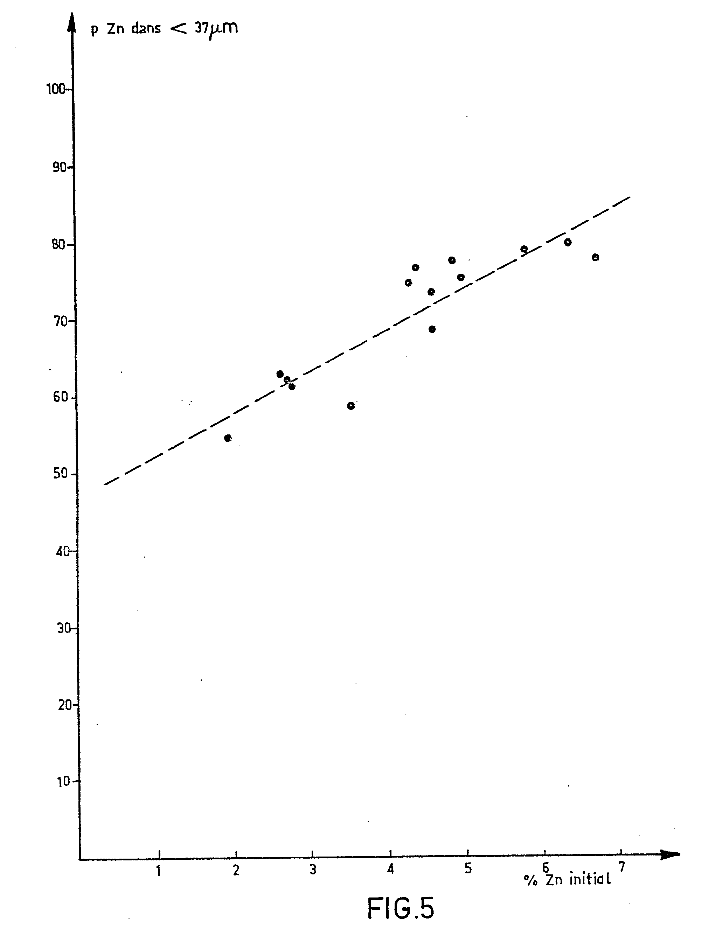

— le taux de récupération du plomb dans la tranche 0—37 $\mu$m est toujours voisin de 80±5 (figure 2) et qu'il croît légèrement en fonction de la teneur en plomb du tout venant comme cela est mis en évidence par la courbe de la figure 4 qui représente la récupération du Pb dans la fraction 0—37 $\mu$m en fonction de la teneur initiale en plomb; sur cette figure, on a porté en ordonnées la récupération en plomb dans la fraction 0—37 $\mu$m et, en abscisses, la teneur initiale en plomb;
— le taux de récupération du Zn est voisin de 60 pour les échantillons prélevés la première semaine, puis se stabilise autour de 75 (figure 3). Il existe une relation quasiment linéaire entre l'augmentation du taux de récupération et l'augmentation de la teneur en zinc du tout venant (coefficient de corrélation: 0.873, taux de confiance: 0,99999 (figure 5)).

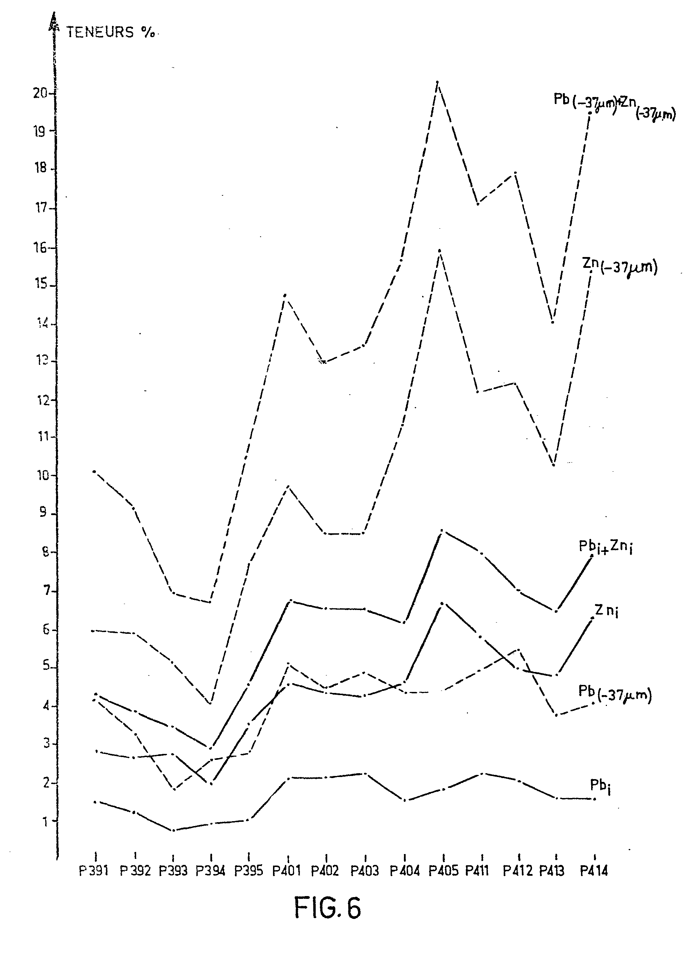

Les teneurs en Pb+Zn dans la fraction ayant une granulométrie inférieure à 37 microns varient de 7 à 20% et dépendent des teneurs du tout venant comme cela est clairement mis en évidence par la figure 6 qui est un diagramme montrant l'évolution des teneurs Pb, Zn et Zn+Pb dans les différents échantillons et les fractions de granulométrie inférieure à 37 $\mu$m; sur la figure 6, on a porté en ordonnées les teneurs en pourcentage de Pb, Zn et Pb+Zn des différents échantillons qui sont indiqués en abscisses.

Lorsque le tout venant contient moins de 4,5% en Pb+Zn (échantillons P 391 à P 396), les teneurs dans la tranche granulométrique 0—37 microns sont comprises entre 7 et 10% et les taux de récupération en zinc voisins de 60. S'il contient entre 4,5 et 8,5% en Pb+Zn, les teneurs dans le concentré sont comprises entre 13 et 20%, les taux de récupération du zinc étant voisins de 75. On constate donc une tendance de ces métaux à se concentrer dans les fines lorsque leur teneur dans le tout venant croît.

Exemple 2

Classement granulométrique par tamisage et cyclonage

La seconde partie de la fraction à granulométrie inférieure à 104 microns obtenue dans l'exemple 1 est soumise à un cyclonage. Le cyclonage s'effectue à l'aide d'un hydrocyclone de laboratoire Minemet sous une pression d'alimentation de 1 kg/cm² et avec un réglage de la pression interne par diminution du débit à la surverse réglée de telle sorte que la sousverse se fasse dans les conditions optimales de l'écoulement en parapluie (diamètre de la buse: 1,5 mm). L'efficacité du cyclonage est contrôlée par des prélèvement à la pipette, durant l'agitation rapide, de l'alimentation (<104 microns)

5

de la sousverse (10—104 microns) et de la surverse (<10 microns). Ces prélèvements subissent une analyse granulométrique complète dans la zone 2—100 microns à l'aide du Sedigraph 5000, les analyses étant effectuées de façon répétitive avec addition croissante de dispersant (Dispex N40—Betz) jusqu'à obtention du maximum de dispersion afin de connaître l'efficacité du cyclonage. Des essais particuliers de cyclonage avec dispersant ont en outre été faits.

A—Essais sans dispersant

Les essais ont été effectués en vue d'obtenir une coupure à 10 microns. Pour chaque essai, on a caractérisé l'efficacité du cyclonage à l'acide de la formule usuelle:

$$E = 10.000 \cdot \frac{P}{Aa} \cdot \frac{p—a}{100-a}$$

où A, P sont les poids de l'alimentation et la surverse, et $a$ et $p$ les proportions respectives, exprimées en %, des poids, des grains de dimensions inférieures à 10 microns de l'alimentation et de la surverse. Cette formule donne le rapport exprimé, en %, du produit classé de la surverse au produit classable Aa/100 de l'alimentation. Le tableau ci-après résume les résultats obtenus.

| Echantillons | P 391 | P 392 | P 393 | P 394 | P 395 | P 401 | P 402 |
|---|---|---|---|---|---|---|---|
| Efficacité de cyclonage | 60,50 | 53,25 | 50,56 | 64,27 | 58,37 | 60,60 | 55,50 |

| Echantillons | P 403 | P 404 | P 405 | P 411 | P 412 | P 413 | P 414 |
|---|---|---|---|---|---|---|---|
| Efficacité du cyclonage | 52,50 | 53,00 | 48,40 | 57,60 | 51,83 | 55,70 | 50,80 |

Ces essais sont acceptables dans la mesure où la formule utilisée donne en général des valeur de E comprises entre 60 et 40%.

Les principaux résultats obtenus sont les suivants:

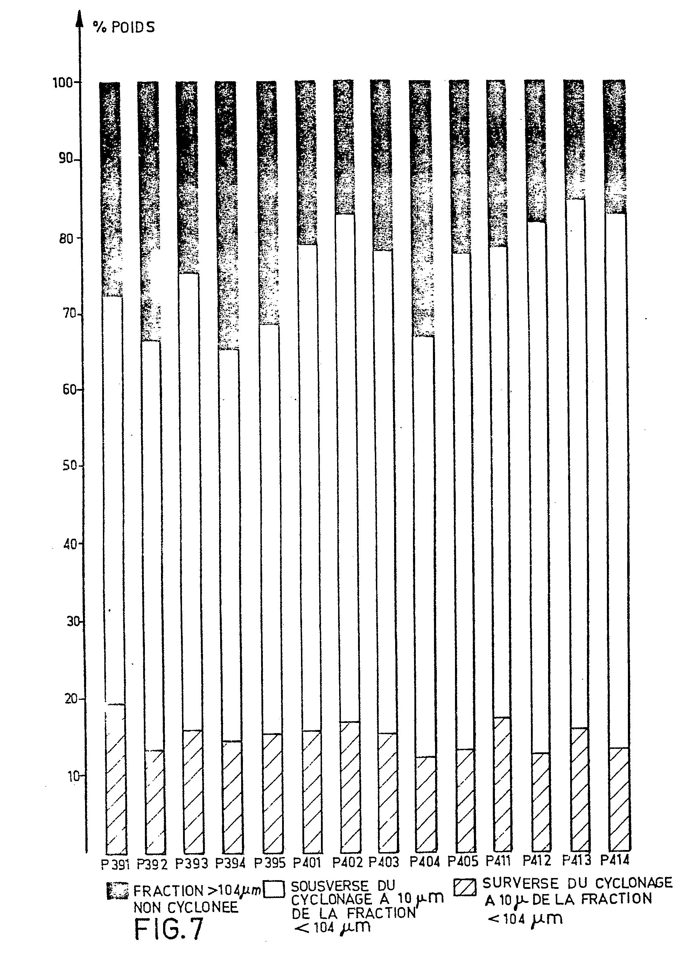

— les pourcentages poids de la tranche granulométrique 0—10 microns sont compris entre 12 et 19% (figure 7).

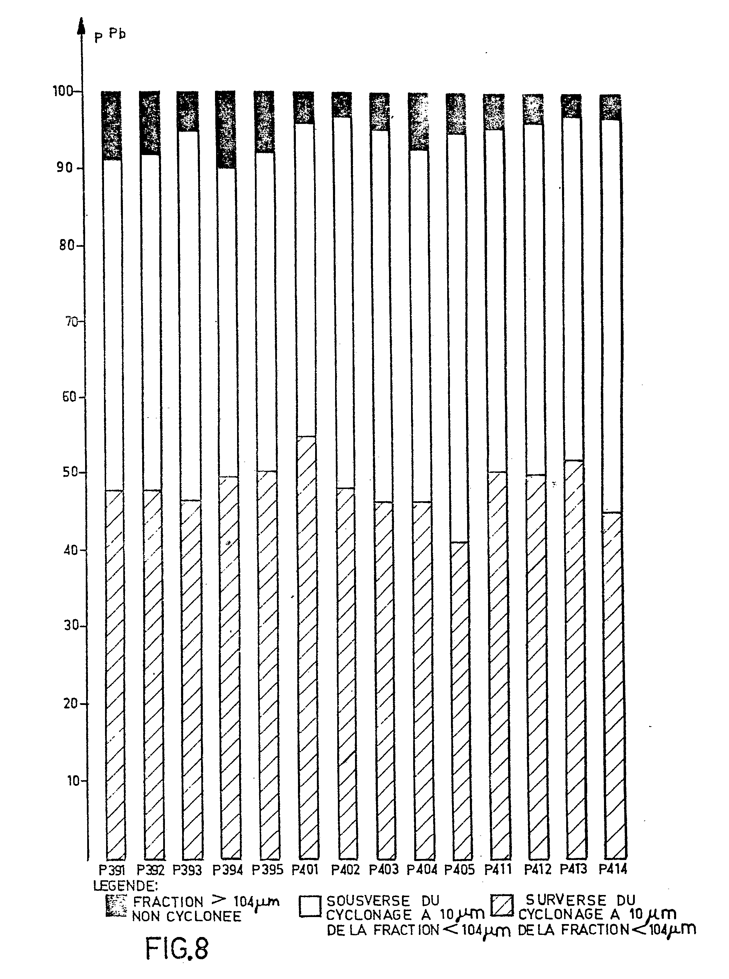

— le taux de récupération du plomb de la surverse est toujours voisin de 50%, à l'exception de l'échantillon P 405 dont l'efficacité du cyclonage a été moyenne: 48,4% (figure 8).

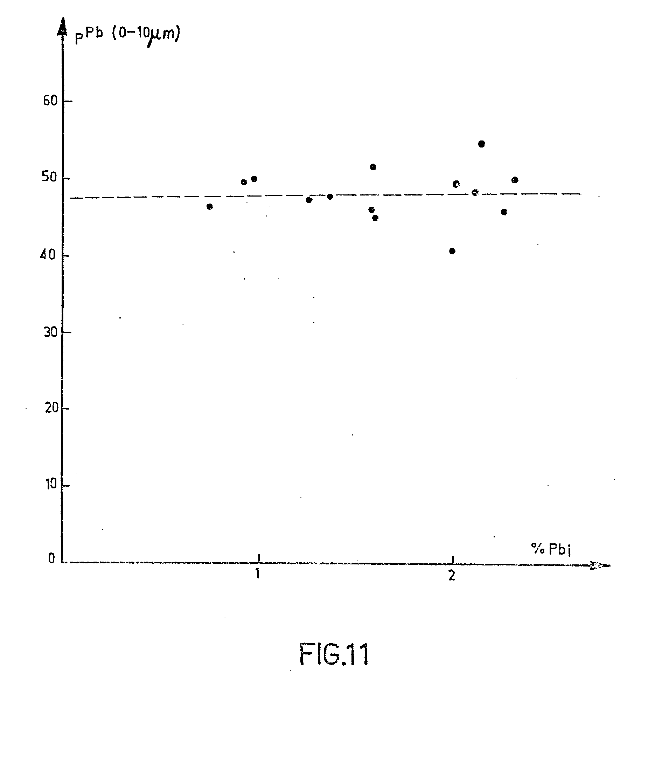

— le taux de récupération du plomb de la surverse est indépendant de la teneur initiale en Pb du tout venant (figure 11).

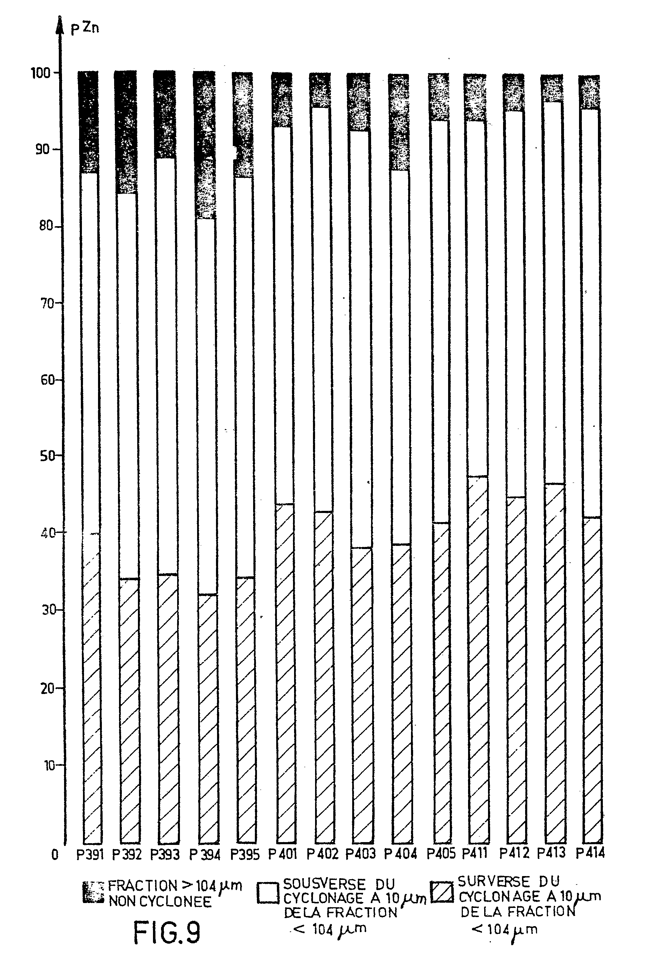

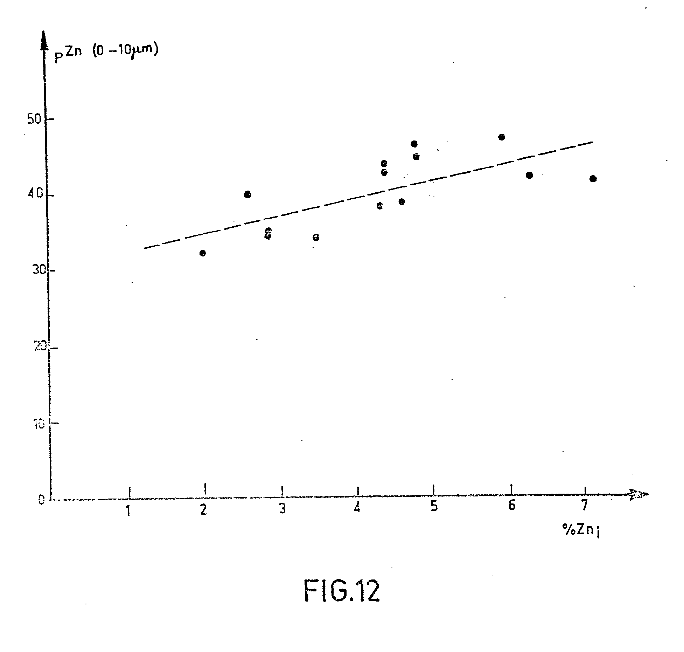

— le taux de récupération du zinc est voisin de 35% pour les échantillons tous venants pauvres et de 45% pour les échantillons plus riches (figures 9 et 12).

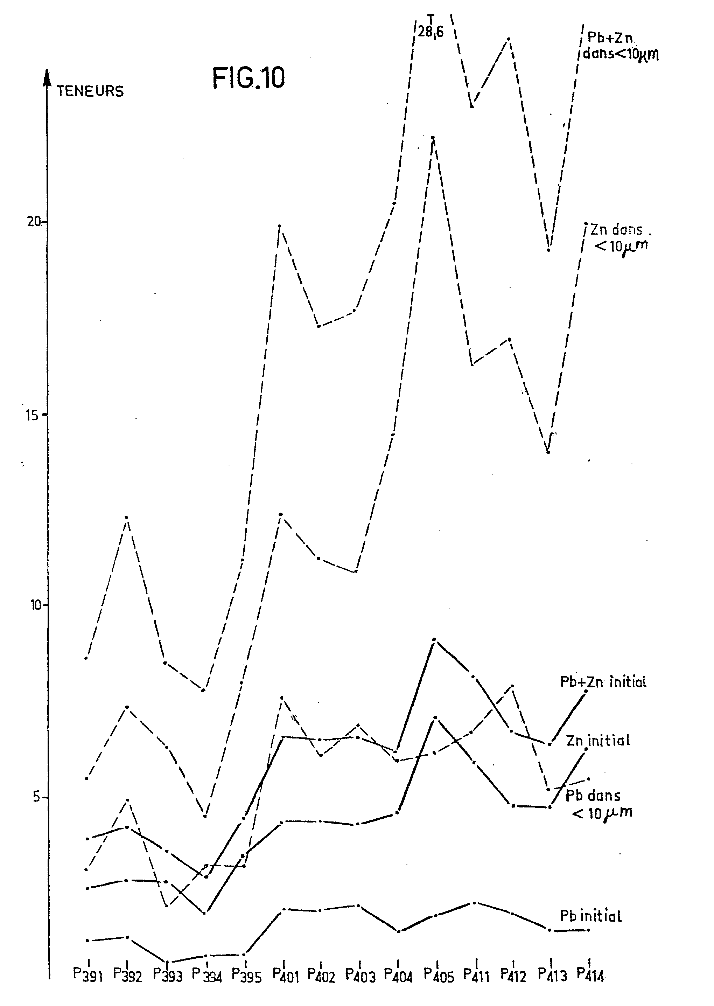

— les teneurs en Pb+Zn sont comprises entre 8 et 28,6% dans les produits de la surverse (figure 10).

— la comparaison des courbes granulométriques de l'alimentation de la surverse et de la sousverse montre qu'environ 25% en poids de la tranche granulométrique 0—10 microns est contenue dans la sousverse, ce qui explique en partie le faible taux de récupération métal du zinc. Le cyclonage peut être amélioré en recyclonant une ou plusieurs fois les sousverses.

— la figure 7 est un diagramme montrant la distribution pondérale des classes granulométriques obtenues par cyclonage pour chaque échantillon qui est indiqué en abscisses, alors que le pourcentage de poids est porté en ordonnées.

— les figures 8 et 9 sont des diagrammes indiquant respectivement la récupération du plomb et du zinc dans les différentes tranches granulométriques obtenues par cyclonage. La récupération de Pb et Zn est indiquée en ordonnées.

— la figure 10 est une série de courbes montrant l'évolution des teneurs en Pb, Zn et Pb+Zn dans les différents échantillons et dans la surverse correspondante du cyclonage à 10 microns de la fraction inférieure à 104 microns. Les teneurs sont indiquées en ordonnées et les échantillons en abscisses.

— les figures 11 et 12 représentent respectivement le taux de récupération de Pb et de Zn dans la fraction 0—10 microns en fonction de la teneur initiale respective en Pb et Zn. Sur ces figures, les % en Pb ou Zn initiaux sont indiqués en abscisses alors que les récupérations de Pb ou Zn dans la fraction 0—10 microns sont portées en ordonnées.

Le tableau III donne les analyses chimiques totales des produits de la surverse (≃0—10 microns) de chaque échantillon.

B—Essais avec dispersant

Des essais ont été effectués en utilisant des doses croissantes de dispersant (Dispex) dans l'alimentation en vue du cyclonage des tranches granulométriques 0—104 en 0—37 microns pour l'obtention d'un produit inférieur à 10 microns. Les résultats obtenus sont consignés dans le tableau ci-après. Selon ces résultats, l'influence du dispersant semble nulle ou légèrement négative sur le taux de récupération du plomb et du zinc.

| Tranche granulo- métrique | Consommation de dispersant | Récupération Pb | | Récupération Zn | |
|---|---|---|---|---|---|
| | | avec | sans | avec | sans |
| 0—104 microns | 1,1 kg/t | 44,0 | 47,6 | 34,9 | 40.0 |
| 0—37 microns | 2,0 kg/t | 56,0 | 56,3 | 40.0 | 41,1 |

Example 3

Classement granulométrique par tamisage et cyclonage avec floculant

En vue de tester l'efficacité du cyclonage sur des produits préalablement floculés dans les décanteurs, on a effectué des essais en prélfoculant la tranche granulométrique 0—104 microns avant les opérations de cyclonage. Le floculant utilisé était le réactif AS 11 (copolymère anionique fort d'acrylamide couramment utilisé dans l'industrie pour la floculation des boues) à la concentration de 250 g/t. Le tableau ci-dessous résume les résultats obtenus sur l'échantillon 402.

| Taux de récupération Pb dans la surverse | | Taux de récupération Zn dans la surverse | |
|---|---|---|---|
| avec | sans | avec | sans |
| 48,9 | 48,3 | 41,1 | 42,6 |

Comme on peut le constater, le cyclonage peut être fait avec une coupure à 10 miconrs, même sur des produits préfloculés. Il s'agit là d'un résultat important dans le mesure ou l'adoption d'une préconcentration par cyclonage à 37 ou 10 microns, sur les installations existantes utilisant la floculation pour la récupération des boues, ne poserait aucun problème. Les forces de cisaillement dans le cyclone sont beaucoup plus importantes que les forces qui assurent la cohésion des flocs.

Exemple 4

Classement granulométrique et traitement par attrition

Les essais ont été effectués sur les tranches granulométriques 37—104 microns des échantillons 411 et 413 dans des cellules spéciales "Agitair". L'attrition consiste à décaper la partie superficielle des particules par frottement et entrechoquement de celles-ci les unes contre les autres ou contre des grains plus durs ajoutés à la pulpe.

On a utilisé du sable de Fontainebleau calibré par tamisage entre 210 et 350 microns. La vitesse d'agitation était de 1000 tr/mn. Les caractéristiques des produits étaient les suivantes:

| % poids par rapport au tout venant | | Pb% | Zn% |
|---|---|---|---|
| 411 | 41,4 | 0.67 | 2,08 |
| 413 | 48,8 | 0,51 | 1,92 |

A—Infleunce du temps d'attrition

Conditions d'essais: 25% solide; 25% sable; 50% d'eau.

Le tableau ci-dessous présente les résultats obtenus, c'est-à-dire l'évolution des teneurs et des taux de récupération dans la fraction 0—37 microns obtenue par tamisage de la pulpe en fin d'opération.

| | Plomb % (teneur initiale: 0.67) | | Zinc % (teneur initiale: 2,08) | |
|---|---|---|---|---|
| | Teneur | Récupération | Teneur | Récupération |
| 5 mn | 1,28 | 26,4 | 4,09 | 28,3 |
| 10 mn | 1,33 | 37,2 | 4,02 | 37,8 |
| 15 mn | 1,36 | 40,5 | 4,20 | 41,1 |
| 25 mn | 1,44 | 48,5 | 4,08 | 47,4 |

# 0 003 464

On remarque qu'au bout de 5 mn les teneurs ont doublé par rapport à la teneur de la tranche granulométrique initiale considérée. Les taux de récupération étant voisins de 27%, on peut considérer qu'il s'agit là de zinc et de plomb concentrés à la surface des minéraux de la gangue. Ensuite, les teneurs se stabilisent avec un accroissement régulier des taux de récupération en fonction du temps dû à l'attrition des constituants de la boue. Il semblerait donc que 73% du plomb et du zinc contenus dans la tranche 37—104 microns soient intimement liés au minerai.

B—Influence de la proportion de sable (temps d'agitation 10 mn)

Les résultats reportés ci-après montrent un accroissement régulier du taux de récupération, par autrobroyage, des constituants en fonction de la proportion de sable utilisée, après libération du plomb et du zinc contenus dans les phases superficielles des minéraux.

|  |  | Pb | | Zn | |
|---|---|---|---|---|---|
|  |  | Teneur | Récupération | Teneur | Récupération |
| 411 | 35% boues<br>15% sable | 1,44 | 20,5 | 4,63 | 22,6 |
|  | 25% boues<br>25% sable | 1,33 | 37,2 | 4,02 | 37,8 |
|  | 15% boues<br>35% sable | 1,41 | 37,8 | 4,22 | 38,5 |
| 413 | 50% boues<br>0% sable | 0,99 | 6,05 | 4,66 | 7,6 |
|  | 40% boues<br>10% sable | 1,08 | 10.6 | 4,5 | 11,8 |
|  | 30% boues<br>20% sable | 1,09 | 22,9 | 4,1 | 22,6 |
|  | 20% boues<br>30% sable | 1,10 | 36,4 | 3,9 | 34,0 |
|  | 10% boues<br>40% sable | 1,00 | 48,7 | 3,6 | 45,3 |

Compte tenu de ces résultats, l'attrition peut être envisagée lorsqu'on désire obtenir de plus forts taux de récupération au détriment de la teneur des préconcentrés.

Example 5

On a traité, selon le mode de réalisation préféré de l'invention, une boue d'épuration des gaz de haut fourneau obtenue après décantation naturelle sans addition de floculant. Cette boue est constituée d'eau et de matières solides dont l'analyse après séchage donne:

$CaO=20,52\%$     $Fe=18,90\%$     $C=17,85\%$     $SiO_2=8,95\%$     $Al_2O_3=3,71\%$     $Zn=4,86\%$     $Pb=1,67\%$.

On a rapporté les poids au traitement d'une quantité de boue contenant 100 kg de matières solides.

1)—La première opération de séparation granulométrique est réalisée par tamisage humide à 106 $\mu$m et permet de séparer une fraction constituée de particules supérieures à 106 $\mu$m renfermant 15 kg de matières solides dont l'analyse inidique des teneurs de 0,28% en Pb et 1,06% en Zn.

2)—La fraction qui contient les particules de dimensions inférieures à 106 $\mu$m subit une seconde opération de séparation granulométrique par tamisage à 37 $\mu$m.

Cette opération permet d'isoler une fraction à particules fines de dimensions inférieures à 37 $\mu$m renfermant 37 kg de matières solides dont les teneurs sont de 3,79% en Pb et 10,35% en Zn.

3)—La fraction intermédiaire, qui renferme une majorité de particules solides de dimensions comprises entre 37 et 106 $\mu$m, représentant un poids de 48 kg de matières, est traitée dans une cellule d'attrition pendant une durée de 10 minutes.

4)—Au terme de cette opération, le mélange subit une séparation granulométrique par tamisage

8

à 37 μm. La fraction à particules fines contient 7,3 kg de matières solides titrant 1,10% de Pb et 3,88% de Zn. La fraction de granulométrie supérieure à 37 μm contient 40,7 kg de matières solides dont les teneurs sont Pb=0,37% et Zn=1,45%.

Le traitement a donc permis de séparer les matières solides constituant la boue initiale en deux parties:

— une première partie comprenant les 15 kg de matières de granulométrie supérieure à 106 μm obtenus au cours de l'opération (1) et les 40,7 kg de matières de granulométrie comprises entre 37 et 106 μm obtenus au cours de l'opération (4). Cette première partie représente donc 55,7 kg de matières dont les teneurs sont de 0,35% en Pb et 1,34% en Zn. Elle pourra être recyclée à l'alimentation du haut fourneau.

— une seconde partie comprenant les 37 kg de matières de granulométrie inférieure à 37 μm obtenus au cours de l'opération (2) et les 7,3 kg de matières de granulométrie également inférieure à 37 μm obtenus au cours de l'opération (4). Cette seconde partie représente donc 44,3 kg de matières dont les teneurs sont de 3,35% en Pb et 9,28% en Zn. Elle renferme 88% du Pb et 85% du Zn initialement contenus dans la boue à traiter. Cette seconde partie pourra être traitée, dans des conditions économiques satisfaisantes, par un procédé chimique de récupération du Pb et du Zn.

### TABLEAU I

| No. d'échantillons | C | CaO | Fe | $SiO_2$ | $Al_2O_3$ | MgO | $K_2O$ |
|---|---|---|---|---|---|---|---|
| P 391 | 20,80 | 17,76 | 21,95 | 10,14 | 4,48 | 1,50 | 0,325 |
| P 392 | 21,10 | 18,60 | 21,45 | 10,73 | 4,60 | 1,53 | 0,225 |
| P 393 | 19,60 | 18,35 | 28,50 | 9,80 | 4,30 | 1,70 | 0,240 |
| P 394 | 23,35 | 16,23 | 21,20 | 10,02 | 4,19 | 1,59 | 0,240 |
| P 395 | 24,10 | 16,08 | 20,45 | 8,96 | 3,91 | 1,52 | 0,240 |
| P 401 | 20,75 | 16,48 | 21,20 | 9,64 | 4,17 | 1,50 | 0,240 |
| P 402 | 23,35 | 15,35 | 20,55 | 9,46 | 4,12 | 1,50 | 0,240 |
| P 403 | 18,60 | 17,36 | 22,25 | 10,05 | 4,28 | 1,56 | 0,250 |
| P 404 | 21,90 | 16,00 | 20,75 | 10,50 | 4,22 | 1,44 | 0,245 |
| P 405 | 22,10 | 15,10 | 19,10 | 9,20 | 3,99 | 1,32 | 0,240 |
| P 411 | 19,40 | 17,04 | 20,15 | 9,41 | 3,97 | 1,46 | 0,255 |
| P 412 | 20,05 | 17,83 | 19,27 | 8,98 | 3,73 | 1,31 | 0,220 |
| P 413 | 17,85 | 20,52 | 18,90 | 8,95 | 3,71 | 1,31 | 0,200 |
| P 414 | 17,70 | 20,10 | 19,50 | 8,90 | 3,92 | 1,20 | 0,195 |

### TABLEAU I (suite)

| No. d'échantillons | $Na_2O$ | $TiO_2$ | P | Mn | S | Pb | Zn |
|---|---|---|---|---|---|---|---|
| P 391 | 0,190 | 0,175 | 0,584 | 0,223 | 0,74 | 1,54 | 2,83 |
| P 392 | 0,110 | 0,133 | 0,643 | 0,257 | 0,62 | 1,22 | 2,66 |
| P 393 | 0,090 | 0,180 | 0,640 | 0,560 | 0,73 | 0,74 | 2,76 |
| P 394 | 0,100 | 0,164 | 0,555 | 0,210 | 0,55 | 0,85 | 1,89 |
| P 395 | 0,090 | 0,144 | 0,528 | 0,205 | 0,63 | 0,94 | 3,65 |
| P 401 | 0,080 | 0,131 | 0,590 | 0,225 | 0,76 | 2,17 | 4,63 |
| P 402 | 0,090 | 0,128 | 0,558 | 0,204 | 0,76 | 2,03 | 4,37 |
| P 403 | 0,090 | 0,142 | 0,616 | 0,239 | 0,72 | 2,23 | 4,32 |
| P 404 | 0,080 | 0,135 | 0,592 | 0,217 | 0,61 | 1,70 | 4,57 |
| P 405 | 0,090 | 0,127 | 0,519 | 0,190 | 0,72 | 1,94 | 7,01 |
| P 411 | 0,085 | 0,121 | 0,563 | 0,211 | 0,83 | 2,26 | 5,67 |
| P 412 | 0,095 | 0,112 | 0,561 | 0,213 | 0,75 | 2,03 | 4,98 |
| P 413 | 0,095 | 0,109 | 0,584 | 0,236 | 0,69 | 1,56 | 4,68 |
| P 414 | 0,090 | 0,117 | 0,550 | 0,230 | 0,77 | 1,63 | 6,40 |

**0 003 464**

TABLEAU II
Analyses chimiques de la fraction <37 microns des différents échantillons

| No. d'échantillons | C | CaO | Fe | SiO$_2$ | Al$_2$O$_3$ | MgO | K$_2$O |
|---|---|---|---|---|---|---|---|
| P 391 | 18,15 | 19,08 | 17,54 | 7,54 | 3,48 | 1,42 | 0,205 |
| P 392 | 15,40 | 19,20 | 19,40 | 8,50 | 3,80 | 1,15 | 0,230 |
| P 393 | 20,60 | 18,44 | 17,39 | 7,61 | 3,44 | 1,27 | 0,200 |
| P 394 | 18,90 | 19,63 | 18,66 | 7,94 | 3,73 | 1,38 | 0,185 |
| P 395 | 17,90 | 19,62 | 18,75 | 9,17 | 4,55 | 1,54 | 0,190 |
| P 401 | 15,90 | 15,93 | 16,90 | 7,56 | 3,23 | 1,23 | 0,205 |
| P 402 | 15,20 | 16,82 | 17,95 | 7,32 | 3,33 | 1,20 | 0,205 |
| P 403 | 16,60 | 17,97 | 16,75 | 7,42 | 3,35 | 1,22 | 0,195 |
| P 404 | 16,10 | 17,07 | 15,10 | 7,11 | 3,09 | 1,16 | 0,195 |
| P 405 | 14,30 | 13,85 | 14,30 | 6,52 | 2,85 | 1,20 | 0,165 |
| P 411 | 14,85 | 16,99 | 14,50 | 6,84 | 2,96 | 1,18 | 0,185 |
| P 412 | 14,50 | 17,80 | 13,50 | 6,76 | 2,83 | 1,07 | 0,175 |
| P 413 | 13,60 | 21,21 | 13,50 | 6,61 | 2,86 | 1,05 | 0,160 |
| P 414 | 13,45 | 18,90 | 12,90 | 6,40 | 2,80 | 0,90 | 0,145 |

TABLEAU II (suite)
Analyses chimiques de la fraction <37 microns des différents échantillons

| No. d'échantillons | Na$_2$O | TiO$_2$ | P | Mn | S | Pb | Zn |
|---|---|---|---|---|---|---|---|
| P 391 | 0,100 | 0,152 | 0,557 | 0,184 | 1,22 | 4,13 | 6,04 |
| P 392 | 0,090 | 0,100 | 0,650 | 0,220 | 0,90 | 1,45 | 3,10 |
| P 393 | 0,090 | 0,146 | 0,529 | 0,172 | 0,95 | 2,10 | 5,65 |
| P 394 | 0,090 | 0,152 | 0,539 | 0,186 | 0,84 | 2,60 | 4,10 |
| P 395 | 0,070 | 0,165 | 0,631 | 0,186 | 1,15 | 2,80 | 7,64 |
| P 401 | 0,075 | 0,089 | 0,528 | 0,177 | 1,42 | 5,03 | 9,36 |
| P 402 | 0,070 | 0,099 | 0,510 | 0,180 | 1,27 | 4,50 | 8,50 |
| P 403 | 0,060 | 0,095 | 0,537 | 0,187 | 1,27 | 4,90 | 8,55 |
| P 404 | 0,060 | 0,089 | 0,507 | 0,170 | 1,20 | 4,40 | 11,30 |
| P 405 | 0,060 | 0,081 | 0,436 | 0,163 | 1,07 | 4,40 | 16,00 |
| P 411 | 0,060 | 0,079 | 0,470 | 0,166 | 1,36 | 4,98 | 12,26 |
| P 412 | 0,070 | 0,070 | 0,476 | 0,165 | 1,47 | 5,50 | 12,55 |
| P 413 | 0,070 | 0,056 | 0,506 | 0,185 | 1,16 | 3,79 | 10,35 |
| P 414 | 0,065 | 0,060 | 0,460 | 0,180 | 1,40 | 4,15 | 15,50 |

TABLEAU III
Analyses de la surverse du cyclonage à 10 microns de la fraction 0—104 microns des différents échantillons

| No. d'échantillons | C | CaO | Fe | SiO$_2$ | Al$_2$O$_3$ | MgO | K$_2$O |
|---|---|---|---|---|---|---|---|
| P 391 | 20,95 | 18,58 | 11,42 | 5,84 | 2,93 | 1,27 | 0,190 |
| P 392 | 18,10 | 18,50 | 15,40 | 8,00 | 3,45 | 1,00 | 0,190 |
| P 393 | 22,70 | 18,50 | 19,50 | 7,30 | 3,22 | 1,55 | 0,185 |
| P 394 | 21,20 | 19,94 | 16,09 | 7,65 | 3,42 | 1,41 | 0,160 |
| P 395 | 20,55 | 18,93 | 14,75 | 7,27 | 3,35 | 1,36 | 0,200 |
| P 401 | 19,50 | 14,76 | 11,65 | 6,41 | 2,82 | 0,93 | 0,195 |
| P 402 | 18,10 | 15,96 | 12,25 | 6,04 | 2,62 | 1,01 | 0,180 |
| P 403 | 19,80 | 16,78 | 11,50 | 5,95 | 2,73 | 0,97 | 0,185 |
| P 404 | 18,40 | 15,72 | 10,00 | 6,16 | 2,57 | 0,88 | 0,175 |
| P 405 | 15,70 | 11,80 | 8,95 | 5,50 | 2,26 | 0,85 | 0,140 |
| P 411 | 16,60 | 15,05 | 9,25 | 5,67 | 2,36 | 1,23 | 0,150 |
| P 412 | 16,40 | 15,86 | 7,60 | 5,69 | 2,26 | 0,85 | 0,160 |
| P 413 | 16,00 | 19,74 | 9,00 | 5,51 | 2,31 | 0,91 | 0,140 |
| P 414 | 15,50 | 15,60 | 6,90 | 4,90 | 2,05 | 0,80 | 0,125 |

10

# 0 003 464

TABLEAU III (suite)

Analyses de la surversse du cyclonage à 10 microns de la fraction 0—104 microns des différents échantillons

| No. d'échantillons | Na$_2$O | TiO$_2$ | P | Mn | S | Pb | Zn |
|---|---|---|---|---|---|---|---|
| P 391 | 0,105 | 0,114 | 0,432 | 0,133 | 1,83 | 6,43 | 8,28 |
| P 392 | 0,075 | 0,090 | 0,630 | 0,220 | 1,09 | 4,95 | 7,35 |
| P 393 | 0,080 | 0,100 | 0,500 | 0,800 | 1,26 | 2,38 | 6,02 |
| P 394 | 0,085 | 0,138 | 0,510 | 0,158 | 0,98 | 3,25 | 4,55 |
| P 395 | 0,070 | 0,138 | 0,464 | 0,144 | 1,31 | 3,24 | 8,00 |
| P 401 | 0,080 | 0,068 | 0,448 | 0,141 | 2,07 | 6,56 | 11,25 |
| P 402 | 0,070 | 0,068 | 0,415 | 0,131 | 1,88 | 6,10 | 11,30 |
| P 403 | 0,070 | 0,060 | 0,454 | 0,141 | 1,83 | 6,90 | 10,95 |
| P 404 | 0,060 | 0,056 | 0,429 | 0,134 | 1,60 | 6,00 | 14,65 |
| P 405 | 0,060 | 0,062 | 0,350 | 0,131 | 1,40 | 6,20 | 22,40 |
| P 411 | 0,050 | 0,056 | 0,363 | 0,134 | 1,73 | 6,82 | 16,41 |
| P 412 | 0,085 | 0,033 | 0,369 | 0,126 | 2,03 | 7,95 | 17,10 |
| P 413 | 0,060 | 0,030 | 0,428 | 0,165 | 1,69 | 5,27 | 14,15 |
| P 414 | 0,065 | 0,020 | 0,360 | 0,120 | 1,88 | 5,55 | 20,15 |

## Revendications

1. Procédé de valorisation du plomb et du zinc contenus dans les boues d'épuration des gaz de hauts fourneaux, utilisant une pré-concentration par voie physique, dans lequel on effectue ladite pré-concentration par un classement granulométrique à une valeur comprise entre 10 et 50 $\mu$m, caractérisé en ce qu'il comprend un traitement de décapage par attrition de la fraction ayant une granulométrie supérieure à la valeur susdite comprise entre 10 et 50 $\mu$m, le classement granulométrique du produit obtenu à une valeur granulométrique comprise entre 10 et 50 $\mu$m, le recyclage vers l'alimentation des hauts fourneaux de la fraction dont la granulométrie est supérieure à cette valeur comprise entre 10 et 50 $\mu$m, et la récupération des fractions ayant une granulométrie inférieure à la valeur granulométrique susdite, en vue de la valorisation de Zn et de Ph contenus dans ces fractions.

2. Procédé selon la revendication 1, caractérisé en ce qu'on opère le traitement de décapage par attrition en présence d'une charge minérale, telle que le sable.

3. Procédé selon la revendication 2, caractérisé en ce que la charge minérale est du sable de granulométrie comprise entre 210 et 350 $\mu$m, la concentration en solides de la pulpe étant comprise entre 50 et 80%.

4. Procédé selon la revendication 1, caractérisé en ce qu'on fait précéder ladite pré-concentration d'un classement granulométrique préalable comprenant une séparation à une valeur située dans la gamme comprise entre 80 et 150 $\mu$m, et en ce qu'on retient la fraction ayant une granulométrie inférieure à la valeur granulométrique choisie dans la gamme ci-dessus pour la soumettre à ladite pré-concentration.

## Patentansprüche

1. Verfahren zur Verwertung von Blei und Zink, die in Schlämmen der Reinigung von Hochofengasen enthalten sind, unter Anwendung einer Voranreicherung auf physikalischem Wege, wobei man die genannte Voranreicherung durch eine Kornklassierung auf einen Wert zwischen 10 und 50 $\mu$m vornimmt, dadurch gekennzeichnet, daß es eine Abtragbehandlung durch Antrieb der Fraktion mit einer Korngröße oberhalb des vorstehend genannten, zwischen 10 und 50 $\mu$m liegenden Wertes, die Kornklassierung des erhaltenen Produkts auf den vorstehend genannten, zwischen 10 und 50 $\mu$m liegenden Wert, die Rückführung der Fraktion, deren Korngröße über diesem zwischen 10 und 50 $\mu$m liegenden Wert liegt, zur Beschickung der Hochöfen und die Rückgewinnung der Fraktionen mit einer Korngröße unterhalb des vorstehend genannten Korngrößenwertes mit dem Ziel der Verwertung des in diesen Fraktionen enthaltenen Zn und Pb umfaßt.

2. Verfahren nach Anspruch 1, dadurch gekennzeichnet, daß man die Abtragbehandlung durch Abrieb in Gegenwart eines mineralischen Füllstoffs, z.B. Sand. vornimmt.

3. Verfahren nach Anspruch 2, dadurch gekennzeichnet, daß der mineralische Füllstoff Sand einer Körnung zwischen 210 und 350 $\mu$m ist und die Feststoffkonzentration der Trübe zwischen 50 und 80% liegt.

4. Verfahren nach Anspruch 1, dadurch gekennzeichnet, daß man der genannten Voranreicherung eine vorherige Kornklassierung vorangehen läßt, die eine Trennung bei einem in Bereich zwischen 80 und 150 $\mu$m liegenden Wert umfaßt, und daß man die Fraktion, die eine Körnung unterhalb des im vorstehend genannten Bereich gewählten Korngrößenwertes hat, zurückbehält, um sie der genannten Voranreicherung zu unterwerfen.

11

**0 003 464**

**Claims**

1. Process for recovering lead and zinc contained in the mud resulting from the secundary scrubbing of blast furnace exhaust gases, employing a pre-concentration by physical means, wherein said pre-concentration is effected by a particle size classification at a value between 10 and 50 $\mu$m, characterised in that it comprises scouring by attrition the fraction having a particle size exceeding the aforementioned value between 10 and 50 $\mu$m, particle size classification of the product obtained at a particle size value between 10 and 50 $\mu$m, recycling to the charging inlet of the blast furnaces the fraction whose particle size exceeds said value between 10 and 50 $\mu$m and recovering fractions having a particle size of less than the aforementioned particle size value for the purpose of recovering Zn and Pb contained in these fractions.

2. Process according to claim 1, characterized in that the scouring treatment by attrition is carried out in the presence of a mineral charge, such as sand.

3. Process according to claim 2, characterized in that the mineral charge is and of a particle size of between 210 and 350 $\mu$m, the concentration in solides of the pulp being between 50 and 80%.

4. Process according to claim 1, characterized in that said pre-concentration is preceded by a prior article size classification comprising a separation at a value within the range of from 80 to 150 $\mu$m and retaining the fraction having a particle size less than the particle size chosen within the aforementioned range so as to subject it to said pre-concentration.

12

FIG.1

FIG.2

FIG.3

FIG.4

FIG.5

FIG. 6

FIG.7

FIG.8

FIG.9

0 003 464

9

# FIG.10

TENEURS

T 28,6

Pb+Zn dans<10µm

Zn dans <10µm

Pb+Zn initial

Zn initial

Pb dans <10µm

Pb initial

$P_{391}$ $P_{392}$ $P_{393}$ $P_{394}$ $P_{395}$ $P_{401}$ $P_{402}$ $P_{403}$ $P_{404}$ $P_{405}$ $P_{411}$ $P_{412}$ $P_{413}$ $P_{414}$

FIG.11

FIG.12